# FASCICULE DE BREVET EUROPEEN

(11) **EP 1 422 110 B1**
(45) Date de publication et mention de la délivrance du brevet: **27.08.2008**
(21) Numéro de dépôt: 03292880.6
(22) Date de dépôt: 19.11.2003
(51) Int. Cl.: B60R 19/18

(54) **Pare-chocs de véhicule automobile comportant un bloc compressible à section transversale croissante**
Autostossfänger mit einem komprimierbarem Block der einen zunehmenden Querschnitt hat
Car bumper having a compressible bloc with a progressively growing transverse section

(30) Priorité: 19.11.2002 FR 0214464
(43) Date de publication de la demande: 26.05.2004
(73) Titulaire: COMPAGNIE PLASTIC OMNIUM, 69007 Lyon (FR)
(72) Inventeur: Banry, Pascal, 01800 Bourg Saint Christophe (FR); Roussel, Thierry, 52500 Fayl la Foret (FR); Chaaya, Riad, Windsor N9A 7A2 (CA)
(74) Mandataire: de la Bigne, Guillaume Michel Marie

(56) Documents cités:
- DE-A- 19 806 541
- FR-A- 2 445 783
- GB-A- 2 033 535
- US-A- 3 933 387
- US-A- 4 072 334
- US-B1- 6 416 094
- US-B1- 6 435 577

## Description

La présente invention a trait à la sécurité passive des véhicules automobiles.

Jusqu'à récemment encore, les préoccupations des constructeurs étaient essentiellement tournées vers la sécurité des passagers du véhicule.

Pour cela, on a vu apparaître de nombreuses solutions consistant à concevoir des pare-chocs, et à rigidifier la structure interne de ceux-ci afin de former une barrière pour protéger l'habitacle du véhicule.

Ces pare-chocs comportent généralement un bouclier, également appelé peau de pare-chocs, qui remplit essentiellement une fonction d'enjoliveur, mais qui est également destiné à absorber des chocs de faible ampleur. Les pare-chocs comportent également une ou plusieurs poutres placées transversalement derrière le bouclier, qui forment une barrière pour protéger l'habitacle du véhicule. Généralement, la poutre est placée au droit des longerons du véhicule, dont la hauteur correspondant sensiblement à la hauteur du genou d'un piéton adulte passant devant le véhicule.

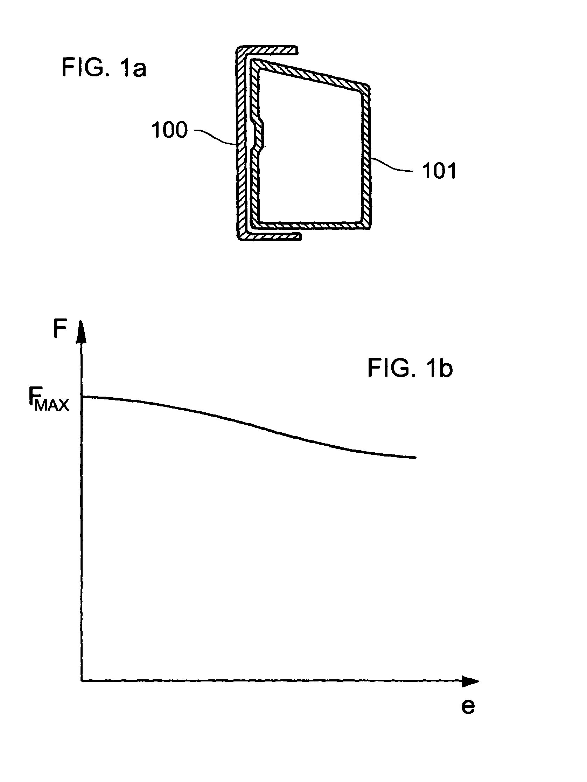

Pour préserver au mieux l'habitacle du véhicule et donc ses passagers, on considérait il y a quelques années que la structure du véhicule et donc du pare-chocs devait être la plus rigide possible. Par conséquent, on utilisait des pare-chocs tels que celui que l'on voit en coupe sur la figure 1a, dans lequel le bouclier (100) est placé au voisinage immédiat de la poutre (101).

Un problème de ce type de pare-chocs consiste en ce que la structure est trop rigide. En effet, avec les progrès réalisés dans le calcul des structures et dans la simulation d'impact (communément appelée « crash test »), on a constaté qu'une déformation prédéterminée de la structure du véhicule permettait d'augmenter la sécurité au sein de l'habitacle.

Un autre problème d'un tel pare-chocs consiste en ce que l'effort (F) subi par un piéton en fonction de son enfoncement (e) dans le bouclier, est maximal (F = F_{MAX}) au moment de l'impact entre le véhicule et le piéton, comme on peut le voir sur le diagramme de la figure 1b. Par conséquent, le choc subi par le piéton entraîne chez celui-ci, même à vitesse réduite, de graves lésions aux jambes.

Pour remédier à ces problèmes, les constructeurs se sont orientés vers la fabrication de pare-chocs comportant des matériaux plus mous pour absorber les chocs.

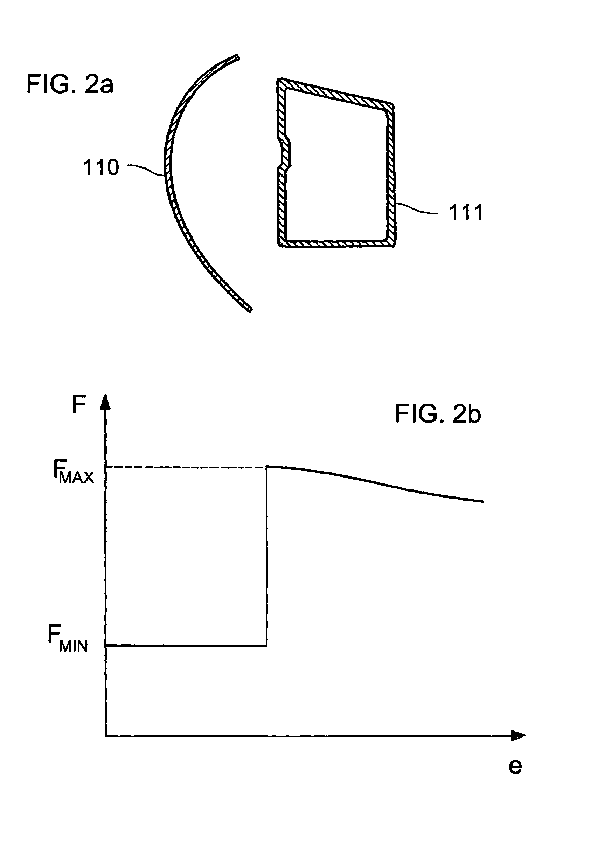

Un exemple de ce type de pare-chocs est illustré sur la figure 2a, sur laquelle le pare-chocs, vu en coupe, comporte une poutre (111) placée derrière un bouclier (110), à une certaine distance de celui-ci. Un tel bouclier est réalisable grâce aux progrès faits dans l'injection plastique et dans l'ajustement des éléments de carrosserie, permettant d'arrondir ses lignes et de l'éloigner de la poutre.

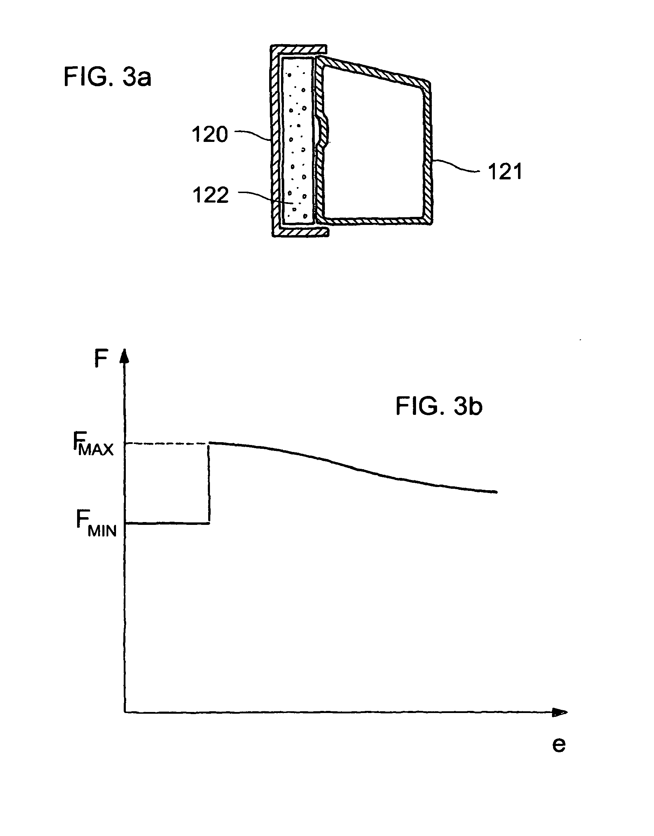

Une autre façon d'absorber les chocs est illustrée sur la figure 3a, sur laquelle on peut voir que le pare-chocs comporte une âme (122) réalisée dans une mousse thermoplastique, comblant l'espace entre le bouclier (120) et la poutre (121) afin d'absorber un peu plus un choc subi par le bouclier.

Le problème de tels moyens d'absorption consiste en ce que, comme on peut le voir sur les diagrammes des figures 2b et 3b, l'effort subi par un piéton en cas de choc frontal est minimal (F=F_{MIN}) au moment de l'impact, et passe instantanément à une valeur maximale (F=F_{MAX}) une fois que le bouclier vient se plaquer contre la poutre.

Ainsi, même si, dans le cas de la figure 3a, la variation de l'effort subi par le piéton au cours de l'enfoncement (c'est-à-dire la différence entre l'effort maximal F_{MAX} et l'effort minimal F_{MIN}) est inférieure à celle qu'il subit dans les situations précédentes, l'effort subi lors de l'impact reste important.

Par conséquent, un piéton subissant un choc frontal avec un pare-chocs du type précité subirait, au niveau de la jambe, et notamment du genou, un effort brutal, ce qui peut causer des lésions importantes. Ces lésions peuvent résulter aussi bien de l'impact que d'une flexion excessive de la jambe autour du genou.

Le problème consiste donc, bien que l'on soit arrivé à améliorer la sécurité des passagers du véhicule, à améliorer la sécurité des piétons en évitant des lésions situées au niveau du genou du piéton, zone particulièrement fragile et difficile à soigner, et en rendant le choc le moins brutal possible.

Pour préserver l'articulation du genou, des normes récentes définissent l'angle maximal (environ 20°) que devrait former la partie inférieure de la jambe avec sa partie supérieure lors de l'impact.

Une solution pour respecter ces normes consiste à utiliser, en dessous du pare-chocs, un appui bas. En effet, un appui-bas agencé sur la bas du pare-chocs a deux effets. D'une part, il répartit l'effort subi par la jambe sur deux zones d'impact, d'autre part, il permet, en cas d'impact avec un piéton, que le bas du tibia du piéton soit empêché de passer sous le véhicule, ce qui limite l'angle de flexion de la jambe. De tels appuis-bas sont couramment utilisés sur les pare-chocs actuels.

Un example d'un tel pare-chocs est connu du document DE-19806541 qui décrit un pare-chocs de véhicule automobile, comportant :
- un bouclier présentant une portion supérieure située sensiblement à la hauteur du genou d'un piéton adulte et du haut du tibia d'un piéton adulte, la portion supérieure s'étendant sensiblement verticalement,
- une poutre placée derrière le bouclier, sensiblement à la hauteur du genou d'un piéton adulte, en regard et à une certaine distance du bouclier,
- interposé entre la poutre et le bouclier un bloc réalisé dans un matériau compressible, comportant une extrémité avant disposée du côté du bouclier et une extrémité arrière disposée en regard de la poutre, le bloc ayant une section transversale qui va croissant de l'extrémité avant vers l'extrémité arrière.

Dans ce pare-chocs de l'état de la technique, un espace est prévu entre la portion supérieure et le bouclier.

Le problème cependant de tels appuis-bas consiste en ce qu'ils exigent un design particulier du pare-chocs du véhicule. Une telle contrainte du design peut nuire à l'esthétique du véhicule.

L'invention vise à remédier à un tel problème en proposant un pare-chocs sans appui-bas comportant une poutre à hauteur du genou d'un piéton, ce pare-chocs épargnant la jambe du piéton en lui faisant subir un effort progressif.

A cet effet, l'invention concerne un pare-chocs de véhicule automobile, comportant :
- un bouclier présentant une première zone d'impact située sensiblement à hauteur du genou d'un piéton adulte et, juste en dessous de cette première zone, une deuxième zone d'impact située sensiblement à hauteur du tibia d'un piéton adulte,
- une poutre placée derrière le bouclier, sensiblement à la hauteur du genou d'un piéton adulte, en regard et à une certaine distance du bouclier,
- interposé entre la poutre et le bouclier, au moins un bloc réalisé dans un matériau compressible, comportant une extrémité avant disposée du côté du bouclier et une extrémité arrière disposée en regard de la poutre, le bloc ayant une section transversale qui va croissant de l'extrémité avant vers l'extrémité arrière, caractérisé en ce que l'extrémité avant du bloc est disposée en regard de la deuxième zone d'impact du bouclier.

Ainsi, grâce à l'invention, en cas de choc frontal avec un piéton, le bloc se comprime en offrant une résistance d'abord minimale au moment de l'impact, puis progressive et continue, et qui va croissant lors de l'enfoncement du bouclier. Il en résulte un étalement de l'effort subi par le piéton, ce qui a pour effet de minimiser ses blessures.

De plus, le point d'impact entre la jambe du piéton et le bouclier du véhicule se situe juste au-dessous du genou du piéton, tout en ayant un pare-chocs sans appui-bas.

De façon optionnelle, le bouclier comporte une portion supérieure et une portion inférieure située en retrait par rapport à la portion supérieure, et dans lequel la poutre est placée en regard de la portion supérieure, et le bloc est interposé entre la poutre et la portion supérieure.

Ainsi, grâce à cette portion inférieure, qui peut-être un appui-bas, lors du choc, le genou du piéton vient d'abord au contact de la portion supérieure du bouclier qui s'enfonce progressivement selon la façon expliquée ci-dessus, jusqu'à ce que la jambe du piéton se trouve, au moment du contact avec la poutre, à l'aplomb de la partie inférieure. Ceci a pour effet, au cours du choc, de maintenir sensiblement droite la jambe du piéton qui, de la sorte, ne risque plus de passer sous le véhicule.

Suivant un mode particulier de réalisation, le pare-chocs comporte un bloc unique disposé transversalement, qui court le long de la poutre.

Suivant d'autres modes de réalisation, il comporte plusieurs blocs espacés, ou juxtaposés.

Le bloc présentant une face avant tournée vers le bouclier et une face arrière opposée tournée vers la poutre, il présente par exemple une section transversale en forme de trapèze dont la petite base est formée par la face avant et la grande base par la face arrière.

Cette forme permet de réaliser de manière simple la section croissante présentée ci-dessus pour permettre la progressivité de l'effort opposé au piéton par le pare-chocs. Cette forme permet également, de façon simple, d'obtenir une face avant destinée à être en regard du tibia du piéton, et une face arrière destinée à être en regard du tibia et du genou.

Suivant un mode particulier de réalisation, le bloc présente une section transversale en forme de trapèze rectangle. Il présente ainsi une face inférieure tournée vers le bas, formant le côté du trapèze qui est perpendiculaire à la fois à sa petite base et à sa grande base et par laquelle le bloc repose par exemple sur un épaulement du bouclier, épaulement qui s'étend en direction de la poutre.

De façon optionnelle, la première zone d'impact du bouclier est située à une hauteur du sol supérieure à 450 mm. Ainsi, comme selon les valeurs citées dans les normes, le genou d'un piéton de taille adulte est situé à 500mm du sol, cette zone est située en regard du genou du piéton.

De façon optionnelle également, l'extrémité arrière du bloc a une section plus de deux fois supérieure à celle de l'extrémité avant du bloc. Cette différence de section permet ainsi d'assurer un amortissement progressif du choc.

En ce qui concerne le matériau dans lequel est réalisé le bloc, il s'agit par exemple d'une mousse et, de préférence, d'un polypropylène expansé.

L'invention a également pour objet une utilisation dans un pare-chocs de véhicule automobile d'un bloc de matériau compressible, de section croissante de l'extérieur vers l'intérieur du véhicule, en vue d'obtenir, de la part du pare-chocs, une force de résistance croissante avec l'enfoncement du bloc lors d'un impact.

D'autres objets et avantages de l'invention apparaîtront à la lumière de la description qui va suivre d'un mode de réalisation, donnée à titre d'exemple non limitatif et faite en référence aux dessins annexés dans lesquels :
- la figure 4a est une vue d'élévation en coupe longitudinale illustrant un pare-chocs comprenant un bouclier, une poutre placée derrière, en regard et à une certaine distance du bouclier, ainsi qu'un bloc de mousse à section trapézoïdale interposé entre le bouclier et la poutre ;
- la figure 4b est un diagramme représentant l'effort subi par un piéton, lors d'un choc frontal avec un pare-chocs du type représenté sur la figure 4a, en fonction de l'enfoncement du pare-chocs ;
- la figure 5 est une vue en perspective, en coupe partielle, du pare-chocs de la figure 1, qui comporte un unique bloc de mousse courant le long de la poutre ;
- la figure 6 est une vue analogue à la figure 5, suivant une première variante de réalisation où le pare-chocs comporte plusieurs blocs de mousse juxtaposés ;
- la figure 7 est une vue analogue aux figures 5 et 6, suivant une seconde variante de réalisation où le pare-chocs comporte plusieurs blocs de mousse espacés.

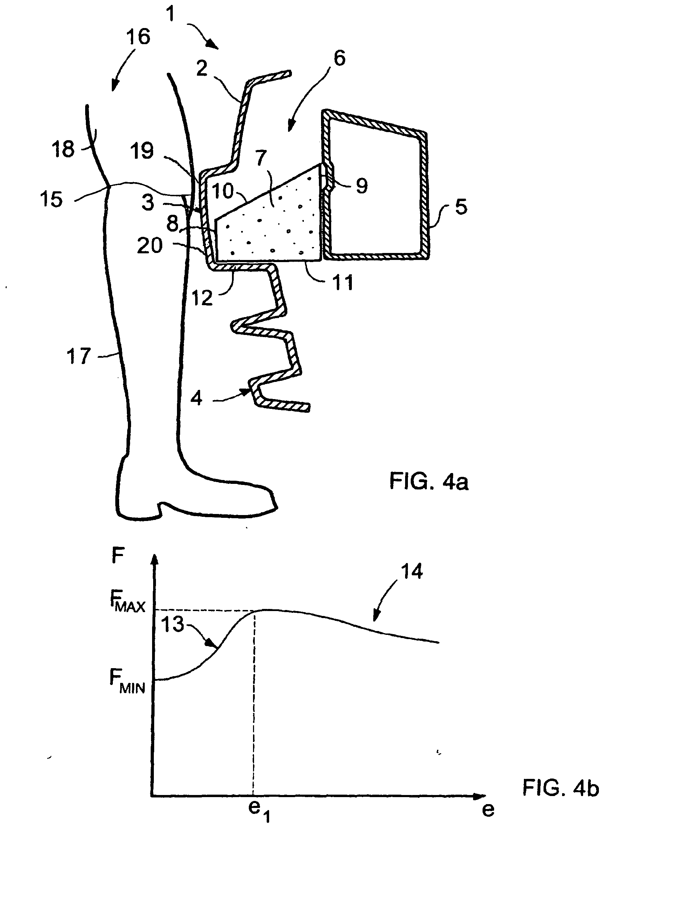

Sur la figure 4a est représenté un pare-chocs 1 de véhicule automobile. Ce pare-chocs 1 comporte un bouclier 2, également appelé peau de pare-chocs, étendu transversalement d'une aile à l'autre du véhicule, et qui remplit essentiellement une fonction d'enjoliveur.

Le pare-chocs 1 comporte également une poutre 5 placée transversalement derrière le bouclier 1, en regard et à une certaine distance de celui-ci, en sorte qu'il est ménagé entre eux un espace 6 dans lequel est disposé un bloc 7 interposé entre le bouclier 2 et la poutre 5.

On a également représenté sur la figure 4a, en face du pare-chocs 1, la jambe 16 d'un piéton adulte de taille moyenne, sur le point de subir un impact avec le véhicule. La jambe représentée comprend le genou 15, le tibia 17 et le fémur 18 du piéton. On considère, comme demandé dans les normes, que le genou 15 du piéton est situé à 500mm du sol.

La poutre 5 du véhicule est agencée en regard de deux longerons du véhicule (non représentés), ce qui correspond sensiblement à la hauteur du genou 15.

Le bouclier 2 présente une portion supérieure 3 qui s'étend sensiblement verticalement et qui, en pratique, se trouve à hauteur de l'articulation du genou 15 d'un piéton adulte de taille moyenne. Cette portion supérieure 3 est prolongée vers le bas par une portion inférieure 4 qui, en pratique, se trouve à hauteur du tibia du piéton défini ci-dessus.

La portion supérieure 3 comporte deux zones d'impact 19 et 20. La première zone 19 est située à 500mm du sol, hauteur qui correspond à celle du genou 15. Plus précisément, le haut de la zone 19 est situé à une hauteur supérieure à 500mm, et le bas à environ 450mm. La seconde zone 20, située juste en-dessous de la première zone 19, est située à la hauteur d'une partie du tibia 17 du piéton, c'est-à-dire à une hauteur par rapport au sol comprise entre 350 et 450mm.

Comme on peut le voir sur la figure 4a, la portion inférieure 4 du bouclier 2 est située longitudinalement en retrait par rapport à la portion supérieure 5, pour des raisons qui apparaîtront dans ce qui va suivre.

Plus précisément, la poutre 5 est placée en regard de la portion supérieure 3, le bloc 7 étant interposé entre la poutre 5 et la portion supérieure 3.

Le bloc 7 est réalisé dans un matériau compressible susceptible d'absorber un choc. Il s'agit de préférence d'une mousse, en l'occurrence un polypropylène expansé. Le bloc 7 a pour fonction d'amortir le choc du piéton contre le pare-chocs 1 afin de limiter chez le piéton les lésions au niveau des jambes.

Le bloc 7 présente une face avant 8, tournée vers la seconde zone 20 du bouclier 2, une face arrière 9 opposée, tournée vers la poutre 5, les faces avant 8 et arrière 9 étant reliées, d'une part par une face supérieure 10, tournée vers le haut, et d'autre part une face inférieure 11 opposée, tournée vers le bas.

Le bloc 7 repose par sa face inférieure 11 sur un épaulement 12 du bouclier 2, épaulement 12 qui s'étend horizontalement en direction de la poutre 5. Il en résulte un bon maintien du bloc 7 en position.

Comme on peut le voir sur la figure 4a, le bloc de mousse 7 n'est pas agencé directement derrière la zone 19, alors qu'il n'y a quasiment pas d'espace entre le bloc 7 et la zone 20.

En effet, la section transversale du bloc 7 va croissant du bouclier 2 vers la poutre 5. Autrement dit, la face avant 8 présente une superficie moindre que la face arrière 9. Le bloc 7 présente en l'occurrence une section transversale en forme de trapèze dont la petite base est formée par la face avant 8 et dont la grande base est formée à la face arrière 9. Par exemple, et tel que représenté sur la figure 4a, le bloc 7 présente une section transversale en forme de trapèze rectangle, dont le côté qui est perpendiculaire à la fois à la petite base et à la grande base est formé par la face inférieure 11.

En cas de choc avec le piéton, l'impact avec le pare-chocs 1 est ainsi localisé au niveau du genou 15. La portion supérieure 3 s'enfonce alors en provoquant la compression du bloc 7, jusqu'à venir à l'aplomb de la portion inférieure 4, que rencontre alors le tibia du piéton.

Grâce à cette structure, les portions supérieure (fémur 18) et inférieure (tibia 17) de la jambe du piéton ne forment pas, au cours de l'enfoncement du pare-chocs, un angle susceptible d'entraîner une rupture ligamentaire (on considère généralement que l'angle limite se situe entre 15° et 20°). La partie inférieure de la jambe du piéton a donc peu de risques de passer sous le véhicule, et le genou est épargné.

Au moment de l'impact, l'enfoncement de la portion supérieure 3 se fait de la façon suivante.

Le genou 15 et le haut du tibia 17 du piéton entrent simultanément en contact avec les zones d'impact 19 et 20 de la portion 3.

Grâce à la forme trapézoïdale du bloc de mousse 7, au moment de l'impact, la première zone 19 se déforme facilement, alors que l'enfoncement de la seconde zone 20 est ralenti par la mousse située directement derrière. Par conséquent, le point d'application de l'effort au début de l'impact est situé au niveau de la seconde zone 20, et donc au niveau du tibia 17 du piéton, alors que son genou 15 s'enfonce sans grande résistance dans la zone 19, ce qui l'épargne.

Ainsi, la forme trapézoïdale de la mousse permet d'abaisser le point d'application de l'effort, ce qui favorise le mouvement de rotation global de la jambe en diminuant l'angle de désalignement constitué par le tibia 17 et le fémur 18, et donc la déformation du genou 15.

Des simulations numériques, réalisées avec deux blocs de mousse (d'une densité de 45g/L), l'un étant rectangulaire et l'autre trapézoïdal, ont montré que l'angle de flexion passe d'une valeur dans le premier cas supérieure à celle exigée dans la norme à une valeur dans le second cas inférieure à celle-ci. Ces simulations montrent l'apport de la forme du bloc de mousse sur l'angle de flexion de la jambe du piéton.

Par ailleurs, la forme trapézoïdale du bloc de mousse7 n'influe pas uniquement sur l'angle de flexion de la jambe 16, mais également sur l'effort subi par le piéton au cours du choc, qui va augmenter progressivement de façon à ne pas avoir d'augmentation brutale de cet effort.

En effet, on a représenté sur le diagramme de la figure 4b la courbe de l'effort F subi par le piéton lors d'un choc frontal avec le pare-chocs 1, en fonction de l'enfoncement e du piéton dans ce dernier.

La courbe présente une première section 13 correspondant à la compression du bloc 7. Cette première section 13 s'étend depuis l'enfoncement nul (e=0), qui correspond à l'instant de l'impact du piéton avec le bouclier 2, instant où la valeur de l'effort subi par le piéton est minimal (F=F_{MIN}), jusqu'à un enfoncement intermédiaire e₁ qui correspond à l'instant où le piéton rencontre la poutre 5, le bloc 7 ayant été totalement comprimé. A cet instant, la valeur de l'effort F subi par le piéton est maximale (F=F_{MAx}).

L'effort F subi par le piéton est continûment croissant sur cette première section 13, entre sa valeur minimale F_{MIN} et sa valeur maximale F_{MAX}.

Cette première section 13 est prolongée par une seconde section 14 s'étendant à partir de l'enfoncement intermédiaire e₁ et qui correspond à l'enfoncement de la poutre 5. Sur cette seconde section 14, la force F subie par le piéton est continûment décroissante depuis sa valeur maximale F_{MAX}, la poutre 5 fléchissant en effet sous la réaction opposée par le piéton.

Ainsi, grâce à cette structure du pare-chocs 1, l'effort F subi par le piéton est une fonction non seulement continue de l'enfoncement e, mais également dérivable, c'est-à-dire que la pente de la courbe qui la représente est continue en tout point.

Le piéton ne subit qu'un seul impact avec le bouclier (e=0), alors qu'avec les pare-chocs connus, où l'effort subi par le piéton est une fonction discontinue de l'enfoncement, le piéton subit deux impacts successifs, à savoir un premier avec le bouclier et un second avec la poutre, comme cela apparaît sur les courbes tracées sur les diagrammes des figures 1b, 2b, 3b.

Cette structure du pare-chocs 1 permet donc une augmentation progressive de l'effort subi par le piéton, ce qui entraîne chez ce dernier une diminution sensible des lésions aux jambes.

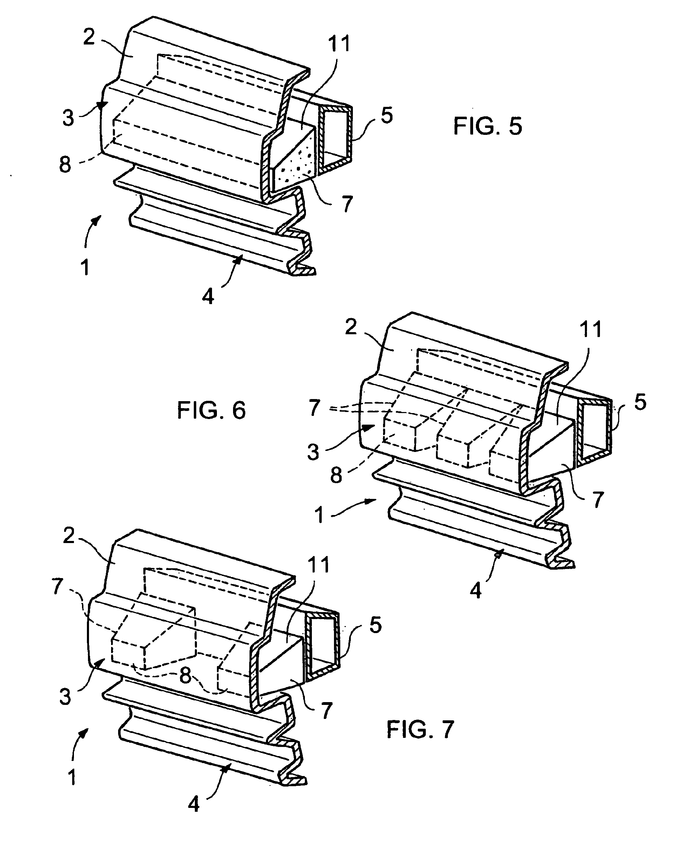

Suivant un mode préféré de réalisation, illustré sur la figure 5, le pare-chocs 1 comporte un bloc unique 7, disposé transversalement, qui court le long de la poutre 5.

Toutefois, l'invention n'est pas limitée à ce mode de réalisation, plusieurs solutions permettant d'aboutir à des résultats similaires.

Ainsi, en variante, le pare-chocs 1 peut comporter plusieurs blocs individuels 7 présentant chacun une forme globale de pyramide tronquée.

De tels blocs 7 peuvent être juxtaposés transversalement, suivant une première variante illustrée sur la figure 6, ou espacés transversalement, suivant une seconde variante illustrée sur la figure 7.

## Revendications

1. Pare-chocs de véhicule automobile, comportant ;
- un bouclier (2) présentant une portion superieure (3) comportant une première zone d'impact (19) située sensiblement à hauteur du genou d'un piéton adulte et, juste en dessous de cette première zone, une deuxième zone d'impact (20) située sensiblement à hauteur du haut du tibia (17) d'un piéton adulte, la portion supèrieure (3) s'ètandant sensiblement verticalement,
- une poutre (5) placée derrière le bouclier (2), sensiblement à la hauteur du genou (15) d'un piéton aduite, en regard et à une certaine distance du bouclier,
- interposé entre la poutre (5) et le bouclier (2), au moins un bloc (7) réalisé dans un matériau compressible, comportant une extrémité avant (8) disposée du côté du bouclier et une extrémité (9) arrière disposée en regard de la poutre, le bloc (7) ayant une section transversale qui va croissant de l'extrémité avant vers l'extrémité arrière, pare-chocs dans lequel l'extrémité avant (8) du bloc est disposée en regard de la deuxième zone d'impact (20) du bouclier ,et le bloc (7) n'est pas agencé directement derrière la premiére zone d'impact (19), alors qu'il n'y a quasiment pas d'espace entre la bloc (7) et la seconde zone d'impact (20).

2. Pare-chocs selon la revendication 1, dans lequel le bouclier (2) comporte une portion supérieure (3) et une portion inférieure (4) située en retrait par rapport à la portion supérieure (3), et dans lequel la poutre (5) est placée en regard de la portion supérieure (3), et le bloc (7) est interposé entre la poutre (5) et la portion supérieure (3).

3. Pare-chocs selon la revendication 1 ou 2, comportant un bloc (7) unique disposé transversalement, qui court le long de la poutre (5).

4. Pare-chocs selon la revendication 1 ou 2, comportant plusieurs blocs (7) espacés.

5. Pare-chocs selon la revendication 1 ou 2, comportant plusieurs blocs (7) juxtaposés.

6. Pare-chocs selon l'une des revendications 1 à 5, dans lequel ledit bloc (7) présente une section transversale en forme de trapèze dont la petite base est formée par l'extrémité avant (8) et la grande base par l'extrémité arrière (9).

7. Pare-chocs selon la revendication 6, dans lequel le bloc (7) présente une section transversale en forme de trapèze rectangle.

8. Pare-chocs selon la revendication 7, dans lequel ledit bloc (7) présente une face inférieure (11), tournée vers le bas, formant le coté du trapeze qui est perpendiculaire à la fois à sa petite base et à sa grande base.

9. Pare-chocs selon la revendication 8, dans lequel ledit bloc (7) repose par sa face inférieure (11) sur un épaulement (12) du bouclier (2) qui s'étend en direction de la poutre (5).

10. Pare-chocs selon l'une quelconque des revendications 1 à 9, dans lequel la première zone d'impact du bouclier est située à une hauteur du sol supérieure à 450 mm.

11. Pare-chocs selon l'une quelconque des revendications 1 à 10, dans lequel t'extrémité arrière du bloc a une section plus de deux fois supérieure à celle de l'extrémité avant du bloc.

12. Pare-chocs selon l'une des revendications 1 à 11, **caractérisé en ce que** ledit matériau est une mousse.

13. Pare-chocs selon la revendication 12, **caractérisé en ce que** ledit matériau est un polypropylène expansé.

14. Pare-chocs selon l'une quelconque des revendications 1 à 13, dans lequel la seconde zone (20) est située à une hauteur par rapport au sol comprise entre 350 et 450 mm.

15. Utilisation dans un pare-chocs de véhicule automobile d'un bloc de matériau compressible de section croissante de l'extérieur vers l'intérieur du véhicule, le bloc (7) ayant une extrémité avant (8), disposée du côté du bouclier en regard d'une seconde zone d'impact (20) située sensiblement à hauteur du haut du tibia (17) d'un piéton adulte, et le bloc (7) n'étant pas agencé directement derrière une première zone d'impact (19) située sensiblement à hauteur du genou d'un piéton adulte, alors qu'il n'y a quasiment pas d'espace entre le bloc (7) et la seconde zone d'impact (20), le bouclier (2) présentant une portion supérieure (3) comportant la première (19) et la seconde (20) zone d'impact, cette portion supérieure (3) s'étendant sensiblement verticalement, en vue d'obtenir, de la part du pare-chocs, une force de résistance croissante avec l'enfoncement du bloc lors d'un impact.

16. Véhicule automobile comprenant un pare-chocs selon l'une quelconque des revendications 1 à 14.

## Claims

1. A motor vehicle bumper comprising:
- a shield (2) presenting a top portion (3) comprising a first impact zone (19) situated substantially at the height of a knee of an adult pedestrian, and immediately below said first zone, a second impact zone (20) situated substantially at the height of the top of the tibia (17) of an adult pedestrian, the top portion (3) extending substantially vertically;
- a beam (5) placed behind the shield (2) substantially at the height of the knee (15) of an adult pedestrian, in register with and at a certain distance from the shield; and
- interposed between the beam (5) and the shield (2), at least one block (7) made of a compressible material, having a front end (8) disposed beside the shield and a rear end (9) disposed in register with the beam, the block (7) having a cross-section that increases from its front end towards its rear end;
in which bumper the front end (8) of the block is disposed in register with the second impact zone (20) of the shield, and the block (7) is not disposed directly behind the first impact zone (19), whereas there is practically no space between the block (7) and the second impact zone (20).

2. A bumper according to claim 1, in which the shield (2) comprises a top portion (3) and a bottom portion (4) set back from the top portion (3), and in which the beam (5) is placed in register with the top portion (3), and the block (7) is interposed between the beam (5) and the top portion (3).

3. A bumper according to claim 1 or claim 2, comprising a single block (7) disposed transversely and running along the beam (5).

4. A bumper according to claim 1 or claim 2, comprising a plurality of spaced-apart blocks (7).

5. A bumper according to claim 1 or claim 2, comprising a plurality of juxtaposed blocks (7).

6. A bumper according to any one of claims 1 to 5, in which said block (7) presents a cross-section in the form of a trapezoid whose small base is formed by the front end (8) and whose large base is formed by the rear end (9).

7. A bumper according to claim 6, in which the block (7) presents a cross-section in the form of a rectangular trapezoid.

8. A bumper according to claim 7, in which said block (7) presents a bottom face (11) facing downwards forming the side of the trapezoid which is perpendicular both to the small base and to the large base.

9. A bumper according to claim 8, in which said block (7) rests via its bottom face (11) on a shoulder (12) of the shield (2), which shoulder extends towards the beam (5).

10. A bumper according to any one of claims 1 to 9, in which the first impact zone of the shield is situated at a height of more than 450 mm above the ground.

11. A bumper according to any one of claims 1 to 10, in which the rear end of the block is of a section which is more than twice that of the front end of the block.

12. A bumper according to any one of claims 1 to 11, **characterized in that** said material is a foam.

13. A bumper according to claim 12, **characterized in that** said material is an expanded polypropylene.

14. A bumper according to any one of claims 1 to 13, in which the second zone (20) is situated at a height above the ground in the range 350 mm to 450 mm.

15. The use in a motor vehicle bumper of a block of compressible material of section that increases going from the outside towards the inside of the vehicle, the block (7) having a front end (8), disposed beside the shield, in register with a second impact zone (20) situated substantially at the height of the top of the tibia (17) of an adult pedestrian, and the block (7) not being disposed directly behind a first impact zone (19) situated substantially at the height of the knee of an adult pedestrian, whereas there is practically no space between the block (7) and the second impact zone (20); the shield (2) presenting a top portion (3) comprising the first (19) and the second (20) impact zones, this top portion (3) extending substantially vertically, so as to obtain a resisting force from the bumper that increases with increasing indentation of the block during an impact.

16. A motor vehicle comprising a bumper according to any one of claims 1 to 14.

## Patentansprüche

1. Stoßfänger eines Kraftfahrzeugs, umfassend:
- eine Abdeckung (2), die einen oberen Teil (3) umfassend eine im Wesentlichen auf Höhe des Knies eines erwachsenen Fußgängers angeordnete erste Aufprallzone (19) und, knapp unterhalb dieser ersten Zone, eine im Wesentlichen auf Höhe des oberen Teils des Schienbeins (17) eines erwachsenen Fußgängers angeordnete zweite Aufprallzone (20) aufweist, wobei sich der obere Teil (3) im Wesentlichen senkrecht erstreckt,
- einen hinter der Abdeckung (2) angeordneten Träger (5), im Wesentlichen auf Höhe des Knies (15) eines erwachsenen Fußgängers, gegenüber der und in einem bestimmten Abstand zur Abdeckung,
- angeordnet zwischen dem Träger (5) und der Abdeckung (2) wenigstens ein aus einem komprimierbaren Material hergesteliter Block (7), umfassend ein an der Seite der Abdeckung angeordnetes vorderes Ende (8) und ein gegenüber dem Träger angeordnetes hinteres Ende (9), wobei der Block (7) einen Querschnitt aufweist, der vom vorderen Ende zum hinteren Ende größer wird,
- Stoßfänger, bei dem das vordere Ende (8) des Blocks gegenüber der zweiten Aufprallzone (20) der Abdeckung angeordnet ist und der Block (7) nicht direkt hinter der ersten Aufprallzone (19) angeordnet ist, da zwischen dem Block (7) und der zweiten Aufprallzone (20) nahezu kein Platz ist.

2. Stoßfänger nach Anspruch 1, bei dem die Abdeckung (2) einen oberen Teil (3) und einen unteren Teil (4), zurückgesetzt zum oberen Teil (3) angeordnet, aufweist, und bei dem der Träger (5) gegenüber dem oberen Teil (3) angeordnet ist und der Block (7) zwischen dem Träger (5) und dem oberen Teil (3) angeordnet ist.

3. Stoßfänger nach Anspruch 1 oder 2, umfassend einen quer angeordneten einzelnen Block (7), der entlang dem Träger (5) verläuft.

4. Stoßfänger nach Anspruch 1 oder 2, umfassend mehrere Blöcke (7) mit Zwischenräumen.

5. Stoßfänger nach Anspruch 1 oder 2, umfassend mehrere Blöcke (7) nebeneinander.

6. Stoßfänger nach einem der Ansprüche 1 bis 5, bei dem der Block (7) einen Querschnitt in Form eines Trapezes aufweist, dessen kurze Basis vom vorderen Ende (8) und dessen lange Basis vom hinteren Ende (9) gebildet wird.

7. Stoßfänger nach Anspruch 6, bei dem der Block (7) einen Querschnitt in Form eines rechtwinkligen Trapezes aufweist.

8. Stoßfänger nach Anspruch 7, bei dem der Block (7) eine nach unten gerichtete Innenfläche (11) aufweist, welche die Seite des Trapezes bildet, die gleichzeitig senkrecht zur kurzen Basis und zur langen Basis ist.

9. Stoßfänger nach Anspruch 8, bei dem der Block (7) mit der Innenfläche (11) auf einer Schulter (12) der Abdeckung (2) ruht, die sich in Richtung des Trägers (5) erstreckt.

10. Stoßfänger nach einem der Ansprüche 1 bis 9, bei dem sich die erste Aufprallzone der Abdeckung in einer Höhe über dem Boden von mehr als 450 mm befindet.

11. Stoßfänger nach einem der Ansprüche 1 bis 10, bei dem das hintere Ende des Blocks einen Querschnitt mehr als zwei Mal so groß wie der des vorderen Endes des Blocks aufweist.

12. Stoßfänger nach einem der Ansprüche 1 bis 11, **dadurch gekennzeichnet, dass** das Material ein Schaumstoff ist.

13. Stoßfänger nach Anspruch 12, **dadurch gekennzeichnet, dass** das Material geschäumtes Polypropylen ist.

14. Stoßfänger nach einem der Ansprüche 1 bis 13, bei dem die zweite Zone (20) auf einer Höhe über dem Boden von 350 bis 450 mm angeordnet ist.

15. Verwendung eines Blocks aus komprimierbarem Material mit einem größer werdenden Querschnitt von der Außenseite zur Innenseite des Fahrzeugs in einem Stoßfänger eines Kraftfahrzeugs, wobei der Block (7) ein an der Seite der Abdeckung gegenüber einer zweiten Aufprallzone (20) angeordnetes vorderes Ende (8), angeordnet im Wesentlichen auf Höhe des oberen Teils des Schienbeins (12) eines erwachsenen Fußgängers, aufweist, und wobei der Block (7) nicht direkt hinter einer ersten Aufprallzone (19), angeordnet im Wesentlichen auf Höhe des Knies eines erwachsenen Fußgängers, angeordnet ist, da zwischen dem Block (7) und der zweiten Aufprallzone (20) nahezu kein Platz ist, wobei die Abdeckung (2) einen oberen Teil (3) aufweist, umfassend die erste (19) und die zweite (20) Aufprallzone, wobei sich dieser obere Teil (3) im Wesentlichen senkrecht erstreckt, um bezüglich des Stoßfängers eine mit einem Eindrücken des Blocks bei einem Aufprall zunehmende Widerstandskraft zu erzielen.

16. Kraftfahrzeug, umfassend einen Stoßfänger nach einem der Ansprüche 1 bis 14.
